# EUROPEAN PATENT APPLICATION

(11) **EP 2 884 623 A1**
(43) Date of publication of application: **17.06.2015**
(21) Application number: 13826219.1
(22) Date of filing: 28.03.2013
(51) Int. Cl.: H02J 7/06, H02G 3/12

(54) **ELECTRICAL CHARGING CONNECTOR AND SYSTEM FOR ELECTRONIC DEVICES**

(30) Priority: 31.07.2012 ES 201230846 U
(71) Applicant: Kvani Urban Collection SL, 08192 Sant Quirze del Vallés (ES)
(72) Inventor: CHIMENIS ALBAIGES, Sergio, E-08192 Sant Quirze del Vallés (ES); TRASMONTE MANCERA, Antonio, E-08192 Sant Quirze del Vallés (ES)
(74) Representative: Morgades y Manonelles, Juan Antonio
(86) International application number: PCT/ES2013/070212
(87) International publication number: WO 2014/020198

(57) **Abstract**

The invention refers to a new electrical charging connector and system for electronic devices which are supplied with direct current from an external electrical supply or source, providing the user with a connector which makes it possible to connect said device, automatically supplying the desired charging or supply voltage from a multivoltage charger and a connector which makes it possible to automatically detect and supply the necessary voltage for each device which is connected.

## Description

### Object of the Invention.

The invention refers to a new electrical charging connector and system for electronic devices which are supplied with direct current from an external electrical supply or source.

### State of the Art.

The ever greater use of mobile electronic devices that have batteries and can be used anywhere without needing to be connected to the mains make it necessary to plan the charging of these batteries so as not to have energy problems when using them.

As these electronic devices are ever more diverse in types of connection as well as charging voltage, it is common to have different transformers for every device, with different types of connections.

This is very inconvenient, as the mobile device depends on a fixed power outlet and you need different chargers and connectors for each device. Even if you have a place with a mains outlet, it is necessary to leave the mobile device next to it for charging, without being able to use it at the workplace or resting place if it is a certain distance away from the mains outlet.

Current mains outlets or connection plates as well as all the connectors related to transmitting electricity for charging or powering an electrical device, use normal two or three-prong plugs that plug into wall sockets, as well as mains cables that lead to an external transformer and this in turn connects to standard mains outlets as wall mains outlets with two or three prongs.

Similarly, in vehicles it is necessary to have a cigarette lighter connector with different connectors for each of the electronic elements, with the problem that the lighter only supplies 12 V.

There are also connectors for wall sockets and in vehicles or connectors fitted to other elements that have a USB socket to charge at 5 V without having any other voltage for charging other equipment.

There are, as part of the state of the art of technology, sofas or furniture incorporating a mains outlet in the piece of furniture for connecting electrical equipment, to which the user of the sofa can connect a device for use or charging. This built in outlet is based an extension of the electric circuit from which the sofa circuit takes the mains power, the general installation of the room where the furniture is located, to the sofa outlet, without transforming this current and therefore it needs the adaptation and transformer equipment necessary for each of the appliance to be connected to it.

There are also, as part of the state of the art, USB sockets that accompany the standard outlets, for charging devices using this type of USB connection, normally transforming the voltage to 5 Volts. These USB connection systems are known to be installed in furniture, as well as in vehicles, with the limitations of 5 Volts, which will not charge devices that require greater voltage.

In the same manner, there are universal chargers that are able to detect the working voltage of the equipment they are connected to, selecting the characteristics of the electrical current to be supplied automatically. This equipment is independent and should be transported with the device to be charged, with the same problems as the habitual transformers of each electrical device.

All these solutions have another problem as is the lack of protection in case of increased temperature in the transformer equipment and the system in general, something that as it is installed on surfaces of combustible materials, such as wood, cloth, foam, plastic, etc., can be dangerous in cases of malfunction.

### Description of the Invention.

This invention aims to offer the user of an electrical device a connector that enables the connection of the device, obtaining the desired charging voltage or power supply automatically, whether it is a wall connector or it is adapted to any surface, such as furniture like tables, sofas, bed structures and headers, kitchen cooktops as well as dashboards or other parts of vehicles, having a system to charge electrical devices that ensures sufficient power for the devices connected to it, without needing the specific transformer of the device to be used or charged, and without having to manually select the voltage to be supplied.

Therefore, this invention is based on system for powering electronic devices with electricity either using a battery or connecting directly to the mains supply. This charging system is installed in the location where one wishes to connect the electronic device, in rooms or commercial premises, in a piece of furniture, which can be an armchair, sofa, or other elements used for resting, also in tables, worktops or other elements used for working or similar actions, as well as vehicle dashboards or control panels, enabling these devices to be charged while using the controls.

This charging system requires a supply of electricity, which can be from an electrical mains outlet, a distribution panel in the installation, or from another source of energy such as the battery of a vehicle where the system is installed.

Electrical wiring will take the power to the universal charging device, which consists of a multivoltage charger. This charging device supplies the voltage required by the electronic device connected to it, being able to supply different voltages from the same charger.

The universal charging device is connected to a final surface connector, fitted to a connection base by means of electric cables that enable the two elements to be in different places, so the connector can be placed in locations that have little space for the charger.

The wiring will consist of four cables, two used to supply information on the characteristics of the electricity to be supplied, and the other two to supply the energy, which has been selected automatically.

The connector for the four-core cable has four pins to receive the wiring, using two of them (as mentioned above) to detect the working voltage.

The connector is designed in the form of a guided four-pin plug, so that the cables will always be connected to the right pins and able to carry at least a continuous voltage of 24 V.

The connection to the electronic device to be charged will be made through this connector, by means of a four-core cable and a terminal adapted to said connector, with a terminal adapted to the different models of charging plugs used in mobile electronic devices on the other end.

Once the universal charger has detected the working voltage, it will automatically transform the electrical power supplied from the exterior to the needs of the device connected, not needing any manual adjustment on the part of the user, thus avoiding possible mistakes when selecting the voltage by choice.

The connector is located on a connection plate as a surface element to make the connection to the electronic device by means of the cable described. This connection plate, or surface element is normally a wall socket, like a mains outlet, with a surface attached connection base and surrounding trim, comprising at least one connector as described in this invention. As well as this connector, the plate may also contain other power outlets, such as for standard two or three-prong plugs, or for data connection, telephone connection or means for USB connection, which can be supplied from the same universal charger system or form independent transformers that supply the standard voltage required for the USB charging system. This connection plate is always located in an accessible place from the position the connector is to be used.

In locations in furniture, control panels or vehicles, the universal charger is held inside the location in question in a housing that can be connected to the connection plate, although it will preferably be housed away from the connection plate, which is located on the external accessible part of the furniture, control panel or vehicle.

In order to avoid possible repercussions in case of malfunctioning of the universal charger, it is normally covered by a fireproof casing that will impede combustion of the generally combustible materials that normally surround the installation in question. In any case, the plate containing the connector and its connexions can carry at least 24 V continuously.

This connector and charging system provides a charging voltage independent from the external energy supply, automatically regulating the charge voltage to that of the device connected to it, having a plate that has a connector, not known up to now on connection plates or wall sockets, for installation on any surface of the elements where it is installed, placing a guided connector at the disposal of the user for inserting the cable terminal for detecting and charging the device to be attached to it, offering this charging service from locations used for leisure or resting such as sofas or beds, as well as in workplaces or places where domestic chores are carried out such as on worktops or tables, or from vehicles that allow the charging of devices while you are driving, even from the common mains outlets in rooms and premises.

Other details and characteristics shall be shown throughout the description below referring to drawings attached to this report which are shown for illustrative but not limiting purposes a practical embodiment of the invention.

### Description of the drawings.

Figure 1 is a perspective view of a connector in a wall socket connected to the charging system.
Figure 2 is a front elevation view of the intermediate or connection plate of the charging system.
Figure 3 is a perspective view of the intermediate or connection plate, and the housing of the charger.
Figure 4 is a perspective view of the installation of a charging system in a piece of furniture of the three-piece suite type.

### Description of a preferred embodiment of the invention.

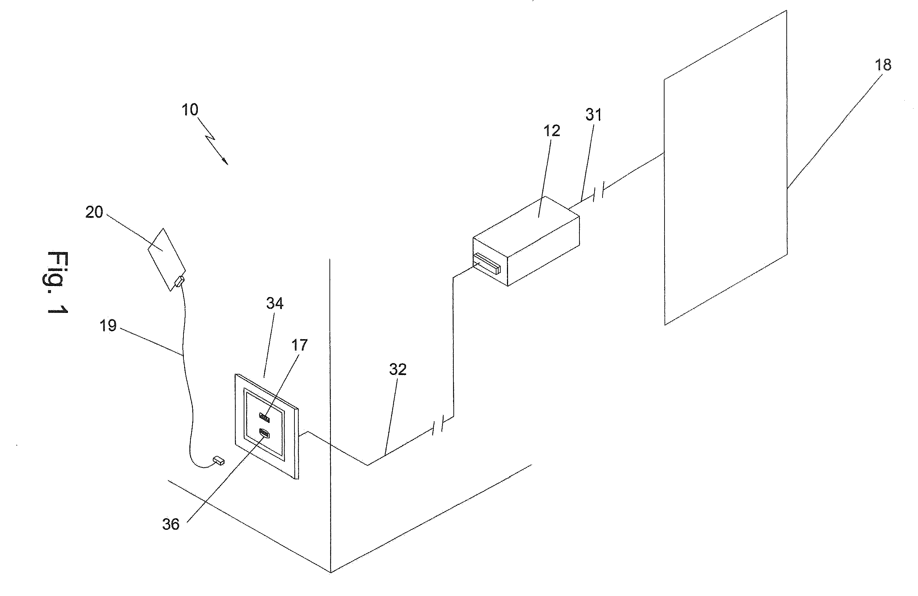

In one of the preferred embodiments of this invention, as shown in figure 1, the charging system (10) is formed by an external power supply (18), which in this case comes from a general safety control panel in a premises for any use, from which the energy is transmitted to the universal charger (12) through a standard electric cable (31).

The universal charger (12) is a charger - transformer that receives electrical energy of different types, automatically detects the voltage needed by the electronic device (20) that is connected to the charger and automatically regulates the output voltage to be supplied to the device (20).

In this case, the universal charger (12) is located, close to the power supply (18); avoiding the installation in walls where it is difficult to make openings, with a four-core cable (32) from the charger (12) to the base or connection plate (34).

The connection plate (34) has a four-pin connector (36), in the form of a guided plug, to avoid incorrectly positioning the cable terminals (19) that connect to the electronic device. The four pins of the connector (36) correspond to the four cores of the cable (32) from the charger (12), two of which are used to detect the voltage and the other two are used for charging. In the same manner, they correspond to the four cores of the cable (19) connecting to the device, necessary both to detect the voltage and for charging-electrical supply.

The other end of the cable (19) to connect to the electronic device (20) has a removable terminal to fit the one corresponding to the input of the device (20), maintaining the correspondence of the voltage detection and charging cables.

In this embodiment, the connection plate (34) has a USB socket (17) also powered from the universal charger (12).

This connection plate is formed by an attaching base fitted to the surface where it is installed, which in this case is the wall of a premises, like the bases of standard plugs, either embedded or surface-fitted, usually including a trim plate.

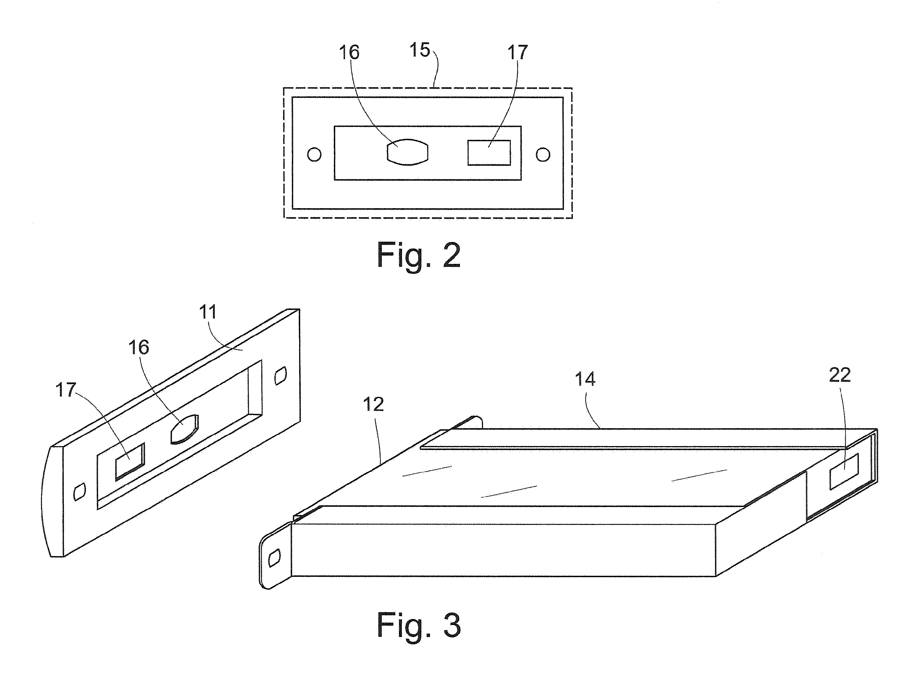

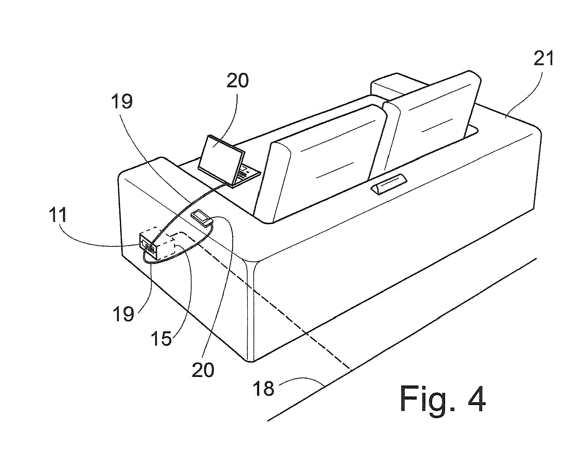

In another of the preferred embodiments of this invention, as shown in figures 2, 3 and 4, the charging system (10) is fitted to a three-piece suite (21) on the external side area, offering the user a charging system (10) at the resting place, so the electronic devices (20) will be at hand while resting or carrying out leisure activities.

The charging system (10) uses an external electrical power supply (18), in this case formed by a connection to the power outlet of the low voltage installation in the room where the three-piece suite (21) is located. This connection to the external power supply (18) is extended inside the three-piece suite, with the habitual means for protection and insulation so as not to affect the materials the three-piece suite (21) is made of, until reaching the area where the universal charger (12) is located inside, in a housing (14) made for it and connected to an intermediate plate (11), or connection plate, being this connection (22) to the charger (12) made with the external power supply (18).

The charger (12) is covered with a fireproof casing (15) to avoid accidents with the combustible materials of the three-piece suite (21). In an alternative embodiment, the charger (12) incorporates the fireproof casing (15).

To carry out the charging process, the charger (12) is fitted to the internal side of the intermediate (11) or connection plate, which has a USB socket (17) and a four-pin input plug (16) corresponding to the plugs of the universal charger (12).

In another alternative embodiment, the charging system (10) is fitted to the dashboard of a car, receiving external power (18) from a battery and providing different charging voltages according to the device (20) connected to the cable plug (19), with four pins (16) on the intermediate plate (11) or connection plate.

Having sufficiently described this invention using the drawings attached, it is easy to understand that any modification may be made to the detail which may be deemed to be appropriate, whenever these changes do not alter the essence of the invention summarised in the following claims.

## Claims

1. **"ELECTRICAL CHARGING SYSTEM AND CONNECTOR FOR ELECTRONIC DEVICES"** using a connection to an external electrical power supply to transform the voltage and supply electronic devices connected to the charger, **characterised in that** the system has universal charging facilities with automatic voltage detection and regulation of the power supplied to the devices connected to it, the charging system has a connection plate that has at least one four-pin connector with guided attachment of the plug, connecting to the universal charger and having a connection cable between the electronic device you wish to charge.

2. **"ELECTRICAL CHARGING SYSTEM AND CONNECTOR FOR ELECTRONIC DEVICES"** according to the claim 1, **characterised in that** the connection cables between the universal charger and the connector of the connection plate, and that corresponding to the connection of the electronic device and said connector of the connection plate, with at least two cables for detecting and acquiring information about the voltage to be supplied, and at least two cables to supply the energy to the device.

3. **"ELECTRICAL CHARGING SYSTEM AND CONNECTOR FOR ELECTRONIC DEVICES"** according to the claim 1, **characterised in that** the charging cable of the electronic device has a connection terminal that is connected in a guided manner to the four-pin connector of the connection plate, the connection terminal to said electronic device having an adaptor for four cores or wires, onto which the different connection terminals according to the equipment to be powered are fitted.

4. **"ELECTRICAL CHARGING SYSTEM AND CONNECTOR FOR ELECTRONIC DEVICES"** according to the claim 1, **characterised in that** the connection plate has an attaching base fitted to the surface where it is installed, being accessible from the position the connector is to be used.

5. **"ELECTRICAL CHARGING SYSTEM AND CONNECTOR FOR ELECTRONIC DEVICES"** according to the claim 4, **characterised in that** the attaching base of the connection plate is a mains outlet type base fitted into the surface where it is placed.

6. **"ELECTRICAL CHARGING SYSTEM AND CONNECTOR FOR ELECTRONIC DEVICES"** according to the claim 1, **characterised in that** the universal chargers are fitted between the electrical power source and the connection plate, without being fitted, maintaining a distance between the installation.

7. **"ELECTRICAL CHARGING SYSTEM AND CONNECTOR FOR ELECTRONIC DEVICES"** according to the claim 1, **characterised in that** the universal chargers are fitted to the connection plate, secured in the housing they are fitted into.

8. **"ELECTRICAL CHARGING SYSTEM AND CONNECTOR FOR ELECTRONIC DEVICES"** according to the claim 1, **characterised in that** the connection plate is of the wall mains outlet type, with a four-pin connector fitted in it.

9. **"ELECTRICAL CHARGING SYSTEM AND CONNECTOR FOR ELECTRONIC DEVICES"** according to the claim 1, **characterised in that** the connection plate has at least one alternative connector for power supply, data or communication.

10. **"ELECTRICAL CHARGING SYSTEM AND CONNECTOR FOR ELECTRONIC DEVICES"** according to the claim 1, **characterised in that** the universal chargers are insulated by means of a fireproof casing.

11. **"ELECTRICAL CHARGING SYSTEM AND CONNECTOR FOR ELECTRONIC DEVICES"** according to the claim 1, **characterised in that** the charging system is isolated inside a piece of furniture, connected to an external power supply.

12. **"ELECTRICAL CHARGING SYSTEM AND CONNECTOR FOR ELECTRONIC DEVICES"** according to the claim 1, **characterised in that** the charging system is installed in the vehicle, with the connection plate fitted to the dashboard or accessible location in the vehicle.

13. **"ELECTRICAL CHARGING SYSTEM AND CONNECTOR FOR ELECTRONIC DEVICES"** according to the claim 1, **characterised in that** the connection plate, the connector and its connections can carry at least 24 V continuously.
